# EUROPÄISCHE PATENTSCHRIFT

(11) **EP 2 151 551 B1**
(45) Veröffentlichungstag und Bekanntmachung des Hinweises auf die Patenterteilung: **09.03.2011**
(21) Anmeldenummer: 09009541.5
(22) Anmeldetag: 23.07.2009
(51) Int. Cl.: F01N 3/02, F01N 3/021, F01N 3/28

(54) **Abgasnachbehandlungselement zur Entfernung von Schadstoffen und/oder Partikeln aus dem Abgas einer Brennkraftmfaschine**
Exhaust gas processing element for removal of contaminants and/or particles from the exhaust gas of a combustion engine
Elément de traitement des gaz d'échappement destiné à la suppression de substances toxiques et/ou de particules à partir des gaz d'échappement d'un moteur à combustion interne

(30) Priorität: 06.08.2008 DE 102008036671; 22.09.2008 DE 102008048314
(43) Veröffentlichungstag der Anmeldung: 10.02.2010
(73) Patentinhaber: MAN Truck & Bus AG, 80995 München (DE)
(72) Erfinder: Döring, Andreas, 80339 München (DE)

(56) Entgegenhaltungen:
- DE-A1- 4 434 673
- DE-U1- 8 812 762
- FR-A- 2 167 132
- FR-A- 2 885 954
- US-A- 4 248 833

## Beschreibung

Die Erfindung betrifft ein Abgasnachbehandlungselement zur Entfernung von Schadstoffen und/oder Partikeln aus dem Abgas einer Brennkraftmaschine eines Fahrzeuges nach dem Oberbegriff des Anspruchs 1.

Um die gesetzlichen Vorgaben bezüglich der Abgasgrenzwerte zu erfüllen, ist es bei Fahrzeugen mit Brennkraftmaschinen erforderlich, Abgasnachbehandlungssysteme, wie Katalysatoren, z. B. 3-Wege-Katalysatoren, SCR-Katalysatoren, NOₓ-Speicherkatalysatoren, oder Partikelabscheidern bzw. Partikelfiltern einzusetzen, die stromab von Brennkraftmaschinen in einem Abgasstrang angeordnet sind. Die Abgasnachbehandlungselemente werden meist als wabenförmige Substrate ausgebildet, die aus metallischen und untereinander verlöteten Folien oder aus einem keramischen Grundmaterial, das meist durch Extrusion hergestellt wird, bestehen. Diese Substrate werden von einem metallischen Mantel umgeben, über den sie in den Abgasstrang mithilfe von Flansch-, Schraub- oder Schweißverbindungen integriert werden.

Bei metallischen Substraten wird die Verbindung zwischen dem Mantel und dem Substrat meist durch Schweißen oder Löten hergestellt. Bei keramischen Substraten, die besonders hoch empfindlich sind, wird die Verbindung dagegen mithilfe einer ausreichend hohen Pressung hergestellt. Um diese Pressung ohne Beschädigung der empfindlichen Substrate zu erreichen, werden zwischen dem Mantelrohr und dem Substrat meist keramische, glas- oder glimmerhaltige Matten angeordnet. Um eine ausreichend hohe Lebensdauer der Abgasnachbehandlungselemente sicherstellen zu können, werden die Mantelrohre üblicherweise aus ferritischem oder austenitischem Edelstahl hergestellt, wodurch eine hohe Korrosionsbeständigkeit gegenüber den zum Teil hochkorrosiven Abgasbestandteilen, wie z. B. Schwefelsäure, Salpetersäure und Ammoniak, erzielt werden kann.

Die Abgasnachbehandlungselemente müssen bereits kurz nach dem Kaltstart der Brennkraftmaschine voll funktionsfähig sein, um möglichst frühzeitig ihre Reinigungsfunktion erfüllen zu können. Dies macht jedoch eine schnelle Aufheizung der Abgasnachbehandlungselemente erforderlich. Um die für eine ausreichende Umsetzung der Schadstoffe erforderliche Temperatur, die sogenannte Anspringtemperatur, bei der 50% des erforderlichen Umsatzes erzielt werden, möglichst frühzeitig zu erreichen, werden Maßnahmen getroffen, die eine Temperaturerhöhung des Abgasstromes und damit eine schnelle Aufheizung der Abgasnachbehandlungselemente über diesen aufgeheizten Abgasstrom bewirken. Dies erfolgt z. B. durch Drosselung von Frischluft und/oder Abgas, durch Veränderung des Einspritzdruckes und/oder des Spritzbeginns und/oder der Abgasrückführungsrate und/oder durch eine elektrische Beheizung der Abgasnachbehandlungselemente. All diesen Maßnahmen ist jedoch gemein, dass sie zu einer Verschlechterung des Wirkungsgrades der Brennkraftmaschine und damit zu einem höheren Kraftstoffverbrauch führen.

Aus der DE 88 12 762 U1, der FR-A-2 167 132, der US-A-4 248 833, der DE 44 34 673 A1 und der FR-A-2 885 954 sind bereits Katalysatoren mit einer Doppelrohranordnung bekannt, bei denen das Substrat in einem sehr dünnwandig ausgebildeten inneren Mantelrohr im Wesentlichen formschlüssig aufgenommen ist, wobei dieses innere Mantelrohr mit einem Spaltabstand von einem äußeren, demgegenüber dickeren Mantelrohr umgeben ist. In Längsrichtung des Katalysators gesehen sind das innere und das äußere Mantelrohr im Bereich der beiden gegenüberliegenden Katalysatorenden miteinander verbunden. Aus Gewichts- und Materialersparnisgründen kann das innere Mantelrohr aus einem gelochten Blech gebildet sein. Mit einem derartigen Aufbau sollen insbesondere in Verbindung mit großvolumigen Katalysatoraufbauten Beschädigungen der Substrate aufgrund der thermischen Wechselbelastungen vermieden werden, da das dünnwandige innere Mantelrohr sich aufgrund seiner Dünnwandigkeit gegenüber Einrohr-Mantelausbildungen schneller erwärmen kann und damit schneller auf das Temperaturniveau des Substrates gelangt, wodurch die thermischen Spannungen zwischen dem inneren Mantelrohr und dem Substrat reduziert werden können. Der Nachteil eines derartigen Aufbaus liegt zum einen darin, dass die mechanische Festigkeit des inneren Mantelrohrs vermindert wird. Zudem kann es zum Austreten von unbehandeltem Abgas durch die wenigstens eine Durchgangsöffnung kommen. Des weiteren führt die Ankopplung des äußeren Mantelrohres an das innere Mantelrohr zu einer Wärmebrücke, die die Wärme schnell vom inneren Mantelrohr auf das äußere Mantelrohr abfließen lässt, so dass die thermische Masse dieses Katalysators entgegen der Aussage in der DE 88 12 762 U1 weiter erhöht wird, was schließlich dazu führt, dass dieser Aufbau erheblichen thermischen Wechselspannungen ausgesetzt ist, was wiederum sehr schnell zu einer Beschädigung des Katalysators führen kann.

Weiter ist es insbesondere in Verbindung mit nichtmetallischen Substraten, wie z. B. keramischen Substraten, z.B. aus der FR-A-2 167 132 bekannt, das Substrat mit Hilfe von Lager- und/oder Quellmatten in dem wenigstens einen Mantelrohr über

Kraftschluss zu fixieren. Diese Matten bestehen üblicherweise aus Fasern, Glimmer, keramischen Bindemitteln etc. und weisen auf Grund ihrer Struktur nur eine sehr geringe Abrasionsfestigkeit auf. Dies führt dazu, dass es in Verbindung mit Durchgangsöffnungen, wie sie bei der DE 88 12 762 U1 beschrieben wurden, zum Abrieb an der Matte in Folge mechanischer Belastung und/oder Erosion kommen kann. Gleiches gilt für die Substrate, insbesondere wenn sie aus einem keramischen Grundmaterial bestehen und/oder wenn die Kanalwände und/oder die Folien, aus denen die Substrate ebenfalls aufgebaut sein können, besonders dünnwandig ausgeführt werden.

Aufgabe der vorliegenden Erfindung ist es daher, ein Abgasnachbehandlungselement zur Entfernung von Schadstoffen und/oder Partikeln aus dem Abgas einer Brennkraftmaschine zur Verfügung zu stellen, das auf funktionssichere und schnelle Weise auf eine erforderliche Betriebstemperatur aufgeheizt werden kann, und mittels dem ein Austreten von Abgas sowie ein Ausblasen von Fasern einer gegebenenfalls vorhanden Lager- und/oder Quellmatte zuverlässig vermieden werden kann.

Diese Aufgabe wird gelöst mit den Merkmalen des Anspruchs 1. Vorteilhafte Weiterbildungen sind Gegenstand der Unteransprüche.

Erfindungsgemäß ist die wenigstens eine Durchgangsöffnung insbesondere zur Vermeidung einer Beschädigung des Substrates und/oder der gegebenenfalls vorhandenen Lager- und/oder Quellmatte durch Abrasion, Erosion, oder mechanische Belastung sowie bevorzugt auch zur Vermeidung des Austretens von Abgas durch die wenigstens eine mantelrohrseitige Durchgangsöffnung mittels wenigstens eines Abdeckelementes abgedeckt bzw. verschlossen, das eine gegenüber einem nicht ausgesparten Durchgangsöffnungsbereich geringere thermische Masse aufweist und/oder in der Art einer Folie dünnwandig ausgebildet ist, das heißt somit insbesondere dünnwandig gegenüber der Mantelrohrwandstärke ausgebildet ist. Vorteilhafte Wandstärken des Abdeckelementes liegen hier im Bereich zwischen 0,02 bis ca. 1 mm. Grundsätzlich könnte eine derartige Abdeckung bzw: ein derartiger Verschluss der wenigstens einen Durchgangsöffnung auch durch ein auf die Mantelrohraußenseite aufgebrachtes Abdeckelement, insbesondere in Form einer dünnwandigen Abdeckschicht, bewirkt werden. Besonders bevorzugt ist jedoch das Vorsehen einer Abdeckschicht, die die wenigstens eine Durchgangsöffnung von dem Mantelrohrinnenraum her abdeckt, insbesondere in Form wenigstens einer zwischen dem Substrat und der Rohrinnenwand angeordneten Zwischenschicht. Nachfolgend wird die Erfindung aus Übersichtlichkeitsgründen stets in Verbindung mit dieser Zwischenschicht näher erläutert. Dort, wo dies technisch ohne weiteres machbar ist, soll jedoch ausdrücklich auch die Verwendung eines von außen her aufgebrachten Abdeckelementes vom Schutzumfang mit umfasst sein. Weiter sei an dieser Stelle ausdrücklich erwähnt, dass auch der Begriff Substrat im weiteren Sinne zu verstehen ist, nämlich als Trägerkörper, der in unterschiedlichster Weise gestaltet sein kann.

Besonders bevorzugt ist zur Vermeidung einer Beschädigung des Substrats und/oder der zum Beispiel Lager- oder Quellmatten durch Abrasion, Erosion bzw. mechanische Belastung sowie gegebenenfalls zur Vermeidung eines Austretens von Abgas durch die wenigstens eine mantelrohrseitige Durchgangsöffnung vorgesehen, dass die wenigstens eine Durchgangsöffnung mittels wenigstens einer dem zwischen der Rohrinnenwand und dem Substrat angeordneten Zwischenschicht abgedeckt bzw. verschlossen ist.

Grundsätzlich ist die wenigstens eine Zwischenschicht stets so angeordnet, dass diese die jeweils zugeordneten Durchgangsöffnungen abdeckt. So ist bei einer Verwendung einer Lager- und/oder Quellmatte zur Fixierung und/oder zur Lagerung des Substrates im Mantelrohr die Zwischenschicht bevorzugt zwischen der Lager- und/oder Quellmatte und der Rohrinnenwand angebracht. Weiter kann das Substrat im Mantelrohr auch durch eine Kraftschluss- und/oder eine Formschluss- und/oder eine Stoffschlussverbindung fixiert sein, z. B. durch eine Formschlussverbindung in Form einer Rastverbindung, höchst bevorzugt einer Nut/Federverbindung. Auch die Anordnung einer Zwischenschicht zwischen dem Substrat und der Lager- und/oder Quellmatte ist grundsätzlich möglich. Dies kann zusätzlich oder alternativ zur Anordnung einer Zwischenschicht zwischen der Rohrinnenwand und der Lager- und Quellmatte erfolgen.

Gemäß einer bevorzugten Ausführungsform ist das bevorzugt eine Zwischenschicht ausbildende Abdeckelement gasundurchlässig ausgebildet. Hierzu ist das Abdeckelement bevorzugt durch eine Folie, insbesondere durch eine Metallfolie, gebildet. Eine derartige Folie weist vorzugsweise lediglich eine Folienwandstärke von 0,02 bis 0,5 mm auf. Mit einer derartigen abdichtenden Folie mit geringer Wandstärke können die Durchgangsöffnungen im Mantelrohr zuverlässig abgedichtet werden, ohne dass die thermische Masse des Aufbaus insgesamt deutlich erhöht wird.

Alternativ zu einer derartigen Folienausgestaltung kann die Zwischenschicht bzw. das Abdeckelement aber grundsätzlich auch durch ein Geflecht oder Gewirk oder eine Matte, vorzugsweise aus einem Metallmaterial, gebildet sein, das nicht von vorneherein gasundurchlässig ist, sondern bevorzugt eine solche definierte Porosität und/oder Maschenweite aufweist, dass dadurch ein Ausblasen bzw. Austreten von Erosions- und/oder Abrasionsmaterial zuverlässig vermieden werden kann.

Grundsätzlich kann das Abdeckelement bzw. die Zwischenschicht aus mehreren verschiedenen, die Durchgangsöffnungen verschließenden Bauteilen, z. B. Folienstücken oder Mattenstücken, ausgebildet sein. Herstellungs- und fertigungstechnisch einfacher ist es jedoch, wenn diese einstückig und/oder materialeinheitlich ausgebildet ist und z. B. am Umfang umlaufend zwischen dem Substrat und der Innenwand des Mantelrohres angeordnet ist.

Mit einer derartigen erfindungsgemäßen Ausgestaltung eines Abgasnachbehandlungselementes bzw. eines Mantelrohres kann in Verbindung mit vorzugsweise einer Vielzahl von wandseitigen Durchgangsöffnungen eine vorteilhafte Absenkung bzw. Reduzierung der thermischen Masse des Mantelrohres, insbesondere im Vergleich zu einem keine derartigen Durchgangsöffnungen aufweisenden Mantelrohr bzw. im Vergleich zur Ausgestaltung gemäß der DE 88 12 762 U1 erzielt werden, wobei gleichzeitig mechanische Beschädigungen der Lager- und/oder Quellmatten und/oder des Substrats sowie ggf. ein Austritt von unbehandeltem Abgas durch das Vorsehen des Abdeckelementes bzw. der Zwischenschicht verhindert wird.

Zusätzlich zu den oben beschriebenen Maßnahmen, den Gasaustritt in die Umgebung und/oder die Beschädigung einer eventuell vorhandenen Lager- und/oder Quellmatte mit Hilfe einer zum Beispiel Zwischenschicht zu vermeiden, kann auch vorgesehen sein, das Abgasnachbehandlungselement in einem Schalldämpfergehäuse aufzunehmen. Ein derartiges Schalldämpfergehäuse ist aufgrund der notwendigen Geräuschdämmung ohnehin im Abgasstrang enthalten, so dass das Schalldämpfergehäuse in einer vorteilhaften Doppelfunktion gleichzeitig auch den unkontrollierten Gasaustritt in die Umgebung und/oder die Beschädigung der Lager- und/oder Quellmatte verhindern kann. Da das Schalldämpfergehäuse ohnehin in den Abgasstrang zu integrieren ist, gelingt auf diese Weise die Abdichtung und der Schutz des Abgasnachbehandlungselementes massenneutral. Durch die Kombination dieser beiden Maßnahmen, also der Abdichtung der Durchgangsöffnungen durch ein Abdeckelement, insbesondere eine Folie, und die Integration des Abgasnachbehandlungselementes in ein Schalldämpfergehäuse wird gleichzeitig das bevorzugt als dünne Folie ausgebildete Abdeckelement vor Beschädigungen, wie sie beispielsweise durch Steinschlag auftreten können, geschützt.

Für den Fall, dass keine Integration in ein Schalldämpfergehäuse möglich sein sollte, kann die Beschädigung der zum Beispiel Zwischenschicht und/oder des Substrates auch durch andere Maßnahmen vermieden werden. Beispielsweise kann dies durch ein Schutzschild erfolgen, das einen vorgegebenen Abstand von der Rohraußenwand und/oder von den dort ggf. angeordneten oder ausgebildeten Versteifungselementen aufweist, wie diese nachfolgend noch näher beschrieben werden. Das Schutzschild kann dabei das Mantelrohr ganz oder teilweise umschließen. Da sich ein derartiges Schutzschild nicht im direkten Kontakt mit dem Abgas befindet, muss es nicht, wie bei der DE 88 12 762 U1, aus Edelstahl ausgebildet werden, was erhebliche Kosteneinsparungen erlaubt. Zusätzlich können derartige Schutzschilder für die Isolierung der Abgasverrohrung dienen, wobei hierfür bevorzugt eine keramische, glas- und/oder quarzhaltige Isolationsschicht zwischen dem Mantelrohr und dem Schutzschild angebracht werden kann.

Für den Fall wiederum, dass das Anbringen derartige Schutzschilde nicht möglich sein sollte, kann das Mantelrohr lediglich in den Bereichen gelocht, d. h. mit Durchgangsöffnungen versehen werden, die nah dem Verbau des Abgasnachbehandlungselementes im Fahrzeug nicht mehr von unten her frei zugänglich sind, d. h. auf einer der Straße abgewandten und dem Fahrzeugunterbau zugewandten Seite der Rohraußenwand angeordnet bzw. ausgebildet sind. Dadurch wird die Beschädigung der Abgasnachbehandlungssubstrate und/oder der bevorzugt Zwischenschicht als Abdeckelement durch z. B. Steinschlag vermieden.

Die Durchgangsöffnungen selbst können jede mögliche Geometrie und Form aufweisen, z. B. rund und/oder oval und/oder rechteckig und/oder dreieckig ausgebildet sein.

Bei den Abgasnachbehandlungselementen kann es sich um einen Katalysator oder einen Partikelabscheider oder einen Partikelfilter handeln. Werden für diese keramische Substrate verwendet, können die zur Fixierung in dem Mantelrohr benötigten, bevorzugt keramischen, glas- und/oder glimmerhalten Lager- und/oder Quellmatten eine bevorzugt, jedoch nicht notwendigerweise radial umlaufende Befestigungsschicht ausbilden. Gegebenenfalls können, um insbesondere die thermische Masse weiter zu reduzieren, auch Aussparungen an ausgewählten Stellen im Bereich dieser Befestigungsschicht vorgesehen sein. Das Katalysatorsubstrat und/oder das Partikelfiltersubstrat und/oder das Partikelabscheidersubstrat können wiederum aus Keramik und/oder Metall und/oder keramischen Fasern und/oder Sintermetall und/oder quarzhaltigen Fasern und/oder Metallschaum bestehen.

Gemäß einer weiteren bevorzugten Ausführungsform weist das wenigstens eine, eine wandseitige Durchgangsöffnung aufweisende Mantelrohr auf der dem Substrat abgewandten Rohraußenwand und/oder auf der dem Substrat zugewandten Rohrinnenwand wenigstens ein das Mantelrohr entlang einer vorgegebenen Mantelrohrlänge und entlang eines vorgegebenen Mantelrohrumfangsbereiches versteifendes Versteifungselement auf. Mit einer derartigen Versteifung des Mantelrohres kann in Verbindung mit vorzugsweise einer Vielzahl von wandseitigen Durchgangsöffnungen eine vorteilhafte Absenkung bzw. Reduzierung der thermischen Masse des Mantelrohres, insbesondere im Vergleich zu einem keine derartigen Durchgangsöffnungen aufweisenden Mantelrohr bzw. im Vergleich zur Ausgestaltung gemäß der DE 88 12 762 U1 erzielt werden, wobei gleichzeitig durch eine gezielte Versteifung des Mantelrohres sichergestellt wird, dass dieses eine ausreichende mechanische Festigkeit für die im Fahrbetrieb auftretenden mechanischen Belastungen aufweist.

Die Versteifung mittels des wenigstens einen Versteifungselementes bewirkt dabei zudem, dass das Substrat im Inneren des Mantelrohres mit einer ausreichenden Pressung aufgenommen werden kann.

Die Versteifungselemente können auf der Außen- und/oder Innenseite des Mantelrohres aufgebracht und/oder durch Umformung ausgebildet sein.

Das Mantelrohr weist in Rohrlängs- und Rohrumfangsrichtung gesehen bevorzugt eine Mehrzahl von voneinander beabstandeten wandseitigen Durchgangsöffnungen auf, wie dies bereits zuvor angedeutet worden ist. Mit einer derartigen Mehrzahl von Durchgangsöffnungen lässt sich die thermische Masse des Mantelrohres deutlich reduzieren, so dass das Abgasnachbehandlungselement sehr schnell auf die notwendige Temperatur aufgeheizt werden kann.

Die wandseitigen Durchgangsöffnungen weisen dabei in Rohrlängs- und Rohrumfangsrichtung gesehen vorzugsweise einen jeweils gleichen Abstand voneinander auf. Alternativ oder zusätzlich dazu können sämtliche wandseitigen Durchgangsöffnungen eine gleiche Form und Größe aufweisen. Dadurch wird ein gleichmäßiges, regelmäßiges Muster der Durchgangsöffnungen erzielt, was sich fertigungstechnisch auf einfache Weise herstellen lässt.

Das Versteifungselement selbst ist bevorzugt durch eine Mehrzahl von stegartig von der Rohraußenwand und/oder Rohrinnenwand abstehenden Versteifungsrippen ausgebildet. Diese Versteifungsrippen können sich z. B. als Längsrippen wenigstens abschnittsweise im Wesentlichen in Rohrlängsrichtung erstrecken. Beispielsweise kann sich in etwa in Rohrlängsrichtung gesehen eine Vielzahl von voneinander beabstandeten einzelnen Längsrippe über eine vorgegebene Wegstrecke in Rohrlängsrichtung erstrecken. Besonders bevorzugt ist dabei vorgesehen, dass sich für eine vollständige Versteifung des Mantelrohres die Längsrippen über die gesamte Rohrlänge erstrecken und zwar entweder abschnittsweise, wie zuvor geschildert, oder aber auch, wie dies herstellungstechnisch und fertigungstechnisch einfacher zu bewerkstelligen ist, mittels einstückiger, sich über die gesamte Rohrlänge erstreckender, durchgehender Längsrippen.

Alternativ oder zusätzlich zu diesen Längsrippen können die Versteifungsrippen aber auch als sich im Wesentlichen in Umfangsrichtung abschnittsweise um das Mantelrohr herum erstreckende Umfangsrippen ausgebildet sein. Auch hier ist wiederum bevorzugt, dass sich die Umfangsrippen für eine vollständige umfangsseitige Aussteifung im Wesentlichen vollständig um den gesamten Rohrumfang herum erstrecken. Auch dies kann wiederum abschnittsweise durch mehrere in Umfangsrichtung voneinander beabstandete Umfangsrippen oder aber bevorzugt durch eine einstückige über den gesamten Umfang umlaufende Umfangsrippe bezogen auf einen bestimmten Rohrumfangsbereich erfolgen.

Die Versteifungsrippen, sei es als Längsrippen und/oder als Umfangsrippen, können sich dabei sowohl geradlinig über die Rohrlänge bzw. den Rohrumfang erstrecken. Auch gewellte oder spiralförmig gewundene Anordnungen sind jedoch jederzeit denkbar und möglich.

Gemäß einer besonders bevorzugten Ausgestaltung ist vorgesehen, dass eine Mehrzahl von einander unter einem vorgegebenen Winkel schneidender Versteifungsrippen vorgesehen ist. Derartige Versteifungsrippen können sehr gut ein regelmäßiges, wabenförmiges Kreuzmuster ausbilden, wobei in den Waben dann die Durchgangsöffnungen ausgebildet sein können. Besonders bevorzugt ist vorgesehen, dass zwei Gruppen von im Wesentlichen parallel zueinander verlaufenden, unterschiedlichen Versteifungsrippen vorgesehen sind, wobei die Längsrippen der beiden Gruppen einander unter einem vorgegebenen Winkel kreuzen und schneiden, z. B. unter einem Winkel von 90°, und somit ein regelmäßiges Versteifungsmuster in Form von Rechtecken an der Rohraußenwand ausbilden. Selbstverständlich sind auch von 90° abweichende Winkel denkbar, wodurch sich ein Rauten- und/oder Dreieckmuster ergeben.

Ein derartiges Versteifungsmuster, wie eben beschrieben, bewirkt eine optimale Biegesteifigkeit des Mantelrohres in Verbindung mit einer optimalen Substratpressungsmöglichkeit.

Wie die zuvor gemachten Ausführungen zeigen, ist der Begriff Versteifungsrippen hier somit in einem umfassenderen Sinne zu verstehen, d. h., dass ausdrücklich auch wellenartige oder andere geometrische Formen von diesem Begriff umfasst sein sollen. Die Versteifungselemente können im einfachsten Fall einstückig mit dem Mantelrohr ausgebildet sein und aus diesen durch Umformen herausgebildet sein. Eine weitere Möglichkeit besteht darin, das wenigstens eine Versteifungselement separat herzustellen und durch z. B. Schweißen, Nieten, durch Formschlussverbindungen oder durch Kraftschlussverbindungen am Rohrmantel zu fixieren.

Die Erfindung wird nachfolgend anhand einer Zeichnung näher erläutert.

Es zeigen:
- Fig. 1: eine schematische Außenansicht eines Katalysators mit jeweils unterschiedlichen Ausführungsformen eines mit Versteifungs- rippen versteiften Mantelrohrs,
- Fig. 2: schematisch einen Schnitt entlang der Linie A-A der Fig. 1,
- Fig. 3: schematisch einen Schnitt entlang der Linie A'-A' der Fig. 1,
- Fig. 4: schematisch einen Schnitt entlang der Linie B-B der Fig. 2,
- Fig. 5: schematisch einen Schnitt entlang der Linie C-C der Fig. 2,
- Fig. 6: schematisch eine alternative Ausführungsform gemäß Fig. 3 mit einem das Mantelrohr vollständig umgebenden Schutzschild, und
- Fig. 7: schematisch eine Ausgestaltung gemäß Fig. 3 mit lediglich in Richtung zum Fahrzeug gerichteten Durchgangsöffnungen.

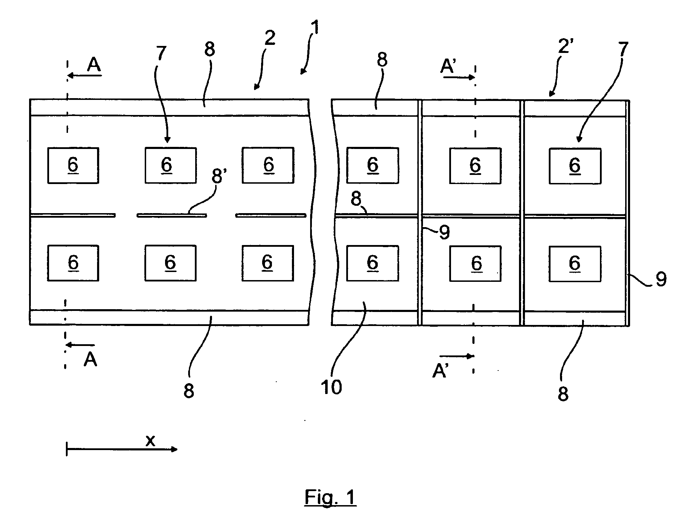

In der Fig. 1 ist schematisch eine Außenansicht eines nachfolgend nicht näher spezifizierten Katalysators 1 als Abgasnachbehandlungselement gezeigt. Die Beschreibung der konkreten erfindungsgemäßen Ausführungsformen anhand eines Katalysators als Abgasnachbehandlungselement ist hier als lediglich beispielhaft zu verstehen.

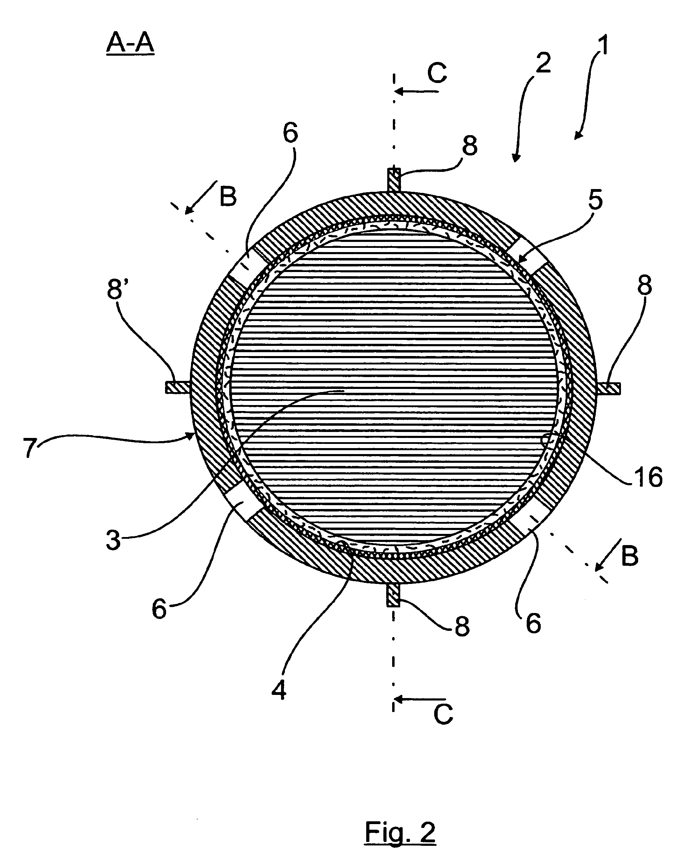

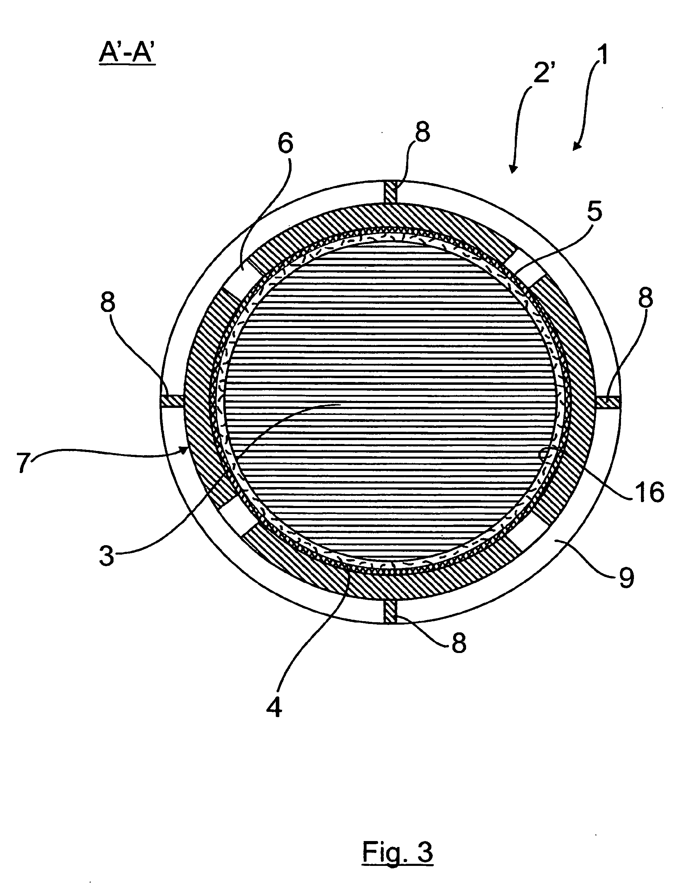

Dieser Katalysator 1 der Fig. 1 zeigt zwei verschiedene Ausführungsformen eines Mantelrohrs 2, 2', die nachfolgend in Verbindung mit den Fig. 2 und 3 näher erläutert werden.

Konkret besteht der Katalysator 1 aus einem Trägerkörper bzw. Substrat 3, das soweit nicht anders beschrieben, herkömmlicher Bauart ist.

Dieses Substrat 3 ist beispielsweise aus einem Keramikmaterial hergestellt und mittels einer z. B. keramischen, glas- oder glimmerhaltigen Lager- und/oder Quellmatte 16 in dem Mantelrohr 2, 2' fixiert.

Das Substrat 3 ist zusammen mit der Lager- und/oder Quellmatte 16 formschlüssig und verpresst im Mantelrohr 2, 2' aufgenommen, wobei zudem zwischen einer Innenwand 3 des Mantelrohres 2, 2' und der Lager- und/oder Quellmatte 16 eine durch eine dünne, bevorzugt gasundurchlässige Metallfolie 5 gebildete Zwischenschicht vorgesehen ist, die hier lediglich aus zeichnerischen Gründen, der besseren Darstellung wegen, übertrieben dick dargestellt ist. Übliche Wandstärken für die Metallfolie liegen zwischen 0,02 mm und 0,5 mm. Die hier beispielhaft durch die Metallfolie 5 gebildete Zwischenschicht dient zum einen dazu, einen Austritt von unbehandeltem Abgas zu verhindern, aber auch dazu, das Substrat und/oder die Lager- und/oder Quellmatte 16 vor mechanischen Beschädigungen und/oder vor Erosion zu schützen.

Die Metallfolie 5 umfasst hier das Substrat 3 in Radialrichtung gesehen vollständig, so dass die mantelrohrseitig, hier in Umfangsrichtung gesehen, beispielhaft jeweils um 90° zueinander versetzten Durchgangsöffnungen 6 von der Substratseite her mittels der Metallfolie 5 bevorzugt gasdicht verschlossen sind und damit kein Abgas von der Substratseite her über die mantelrohrseitigen Durchgangsöffnungen 6 in die Umgebung außerhalb des Mantelrohres 2, 2' entweichen kann bzw. es zu keinem Ausblasen von Fasern der Lager- und/oder Quellmatte 16 kommen kann.

Wie dies insbesondere der Fig. 1 entnommen werden kann, sind zudem in Rohrlängsrichtung x gesehen eine Vielzahl von sich im Wesentlichen über die gesamte Rohrlänge erstreckenden und voneinander beabstandeten Durchgangsöffnungen 6 vorgesehen, so dass sich insgesamt ein Mantelrohr 2, 2' ergibt, das über die gesamte Mantelfläche gesehen ein gleichmäßiges Lochmuster aufweist, wodurch die thermische Masse des Mantelrohres 2, 2' deutlich reduziert wird und damit der Katalysator 1 sehr schnell auf die erforderliche Betriebstemperatur aufgeheizt werden kann.

Um die mechanische Schwächung des Mantelrohres 2, 2' durch die Vielzahl der Durchgangsöffnungen 6 auszugleichen und eine optimale Pressung des Substrates 3 im Inneren des Mantelrohres 2, 2' sowie eine gewünschte optimale Biegesteifigkeit des Mantelrohres 2, 2' zu erhalten, können an der Außenwand 7 des in der linken Bildhälfte der Fig. 1 dargestellten Ausführungsbeispieles des Mantelrohres 2 eine Mehrzahl von in Umfangsrichtung (hier beispielhaft um 90°) voneinander beabstandeten Längsrippen 8 als Versteifungsrippen vorgesehen werden (Fig. 2), die sich beispielhaft über die gesamte Rohrlänge erstrecken können. Grundsätzlich könnten sich diese Längsrippen 8 in Rohrlängsrichtung gesehen auch lediglich abschnittweise über die Rohrlänge erstrecken, wie dies beispielhaft für die bezogen auf die linke Bildhälfte der Fig. 1 mittlere Längsrippe 8' dargestellt ist. Auch andere Anordnungen der Längsrippen 8, z. B. gewellte, gebogene oder auch sich spiralförmig im Wesentlichen in Rohrlängsrichtung x erstreckende Anordnungen sind jederzeit möglich.

Wie dies insbesondere aus der Darstellung der Fig. 2 sehr gut ersichtlich ist, sind die Längsrippen 8, 8' jeweils mittig zwischen zwei in Umfangsrichtung voneinander beabstandeten Durchgangsöffnungen 6 angeordnet, d. h. somit im hier gezeigten Beispielfall um 45° gegenüber den Durchgangsöffnungen 6 versetzt angeordnet.

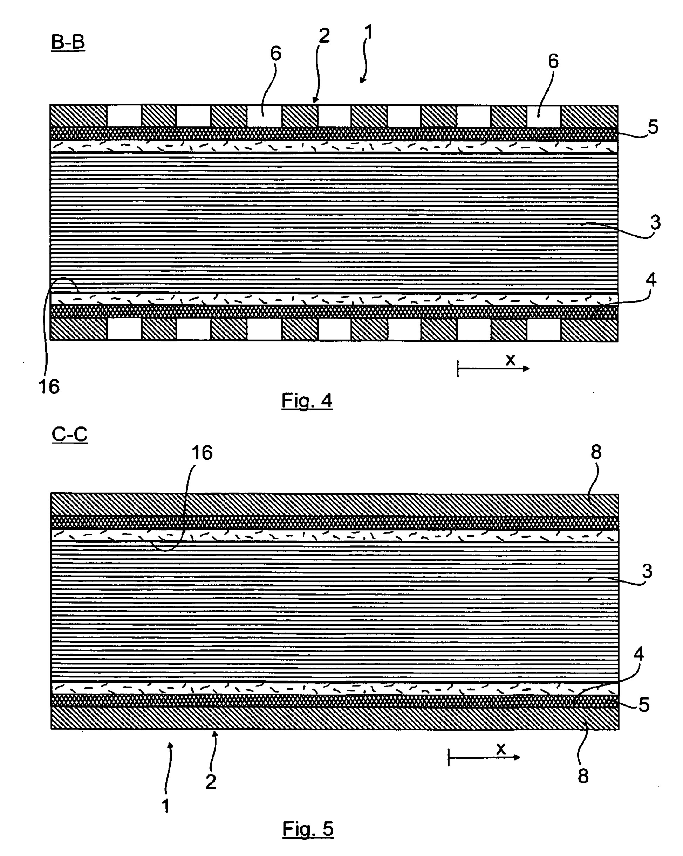

Die Fig. 4 und 5 zeigen jeweils Längsquerschnitte entlang der Linie B-B und C-C der Fig. 2, aus denen ebenfalls nochmals der Aufbau des Innenlebens des Katalysators 1 in Rohrlängsrichtung x gut ersichtlich ist.

Wie dies aus der, ein alternatives Ausführungsbeispiel zur eben beschriebenen Ausführungsform zeigenden rechten Bildhälfte der Fig. 1 in Verbindung mit der Fig. 3 ersichtlich ist, kann das Mantelrohr 2' zusätzlich zu den Längsrippen 8 auch mit diese Längsrippen 8 hier beispielhaft unter einen Winkel von 90° kreuzenden Umfangsrippen 9 versehen sein, die in Rohrlängsrichtung x gesehen voneinander bevorzugt einen jeweils gleichen Abstand aufweisen und zwischen zwei in Rohrlängsrichtung voneinander beabstandeten Durchgangsöffnungen 6 verlaufen. Diese Umfangsrippen 9 bewirken eine zusätzliche Versteifung und damit mechanische Festigkeit des Mantelrohres 2', ohne dass die thermische Masse des Katalysators 1 zu sehr erhöht wird.

Selbstverständlich sind auch hier sämtliche Arten von Kreuzungsmustern möglich, so z. B. solche Kreuzungsmuster, die bezogen auf die Waben 10 zu einer rautenförmigen und/ oder dreieckigen Wabengeometrie führen, was hier allerdings nicht dargestellt ist. Zudem können sowohl die Längsrippen 8 als auch die Umfangsrippen 9 auch abweichend vom geradlinig in Umfangsrichtung bzw. in Rohrlängsrichtung x verlaufend gezeigten Ausführungsbeispiel über das Mantelrohr 2' verlaufen, z. B. mehr oder weniger spiralförmig um das Mantelrohr 2' herumgewunden sein. Auch dies ist hier nicht dargestellt. Desweiteren können auch bei dieser alternativen Ausgestaltung die Längsrippen 8 und die Umfangsrippen 9, z. B. in vorgegebenen Bereichen, lediglich abschnittsweise an der Außenwand 7 und/oder der Innenwand 4 des Mantelrohres 2' vorgesehen sein, d. h. es können Unterbrechungen, wie z. B. in Verbindung mit der Längsrippe 8' zuvor erläutert, vorgesehen sein. Auch dies ist hier allerdings nicht explizit dargestellt.

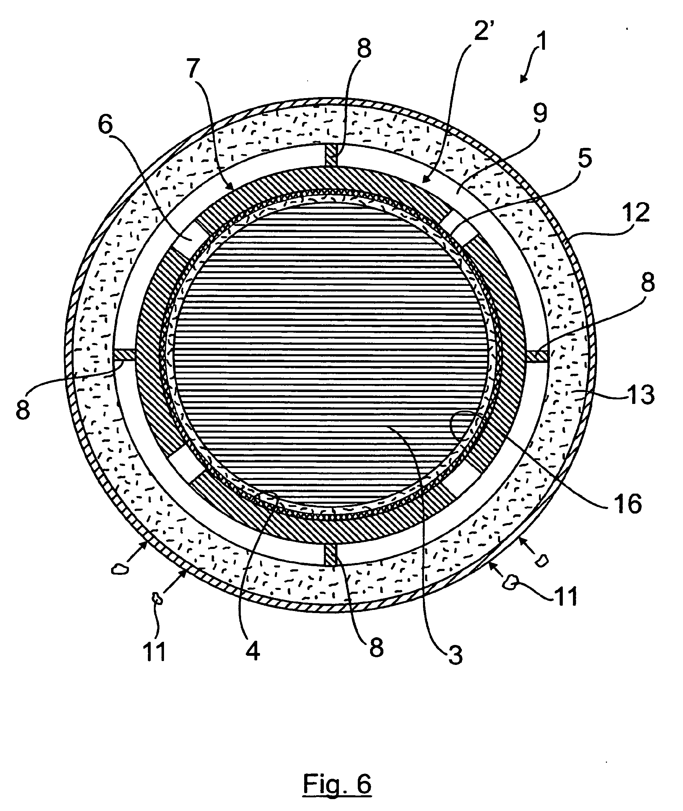

Um beispielsweise Beschädigungen der Metallfolie 5 durch Steinschlag 11 zu vermeiden, kann, wie dies in der Fig. 6 dargestellt ist, das hier beispielhaft ausgewählte Mantelrohr 2' von einem Schutzschild 12 umgeben sein. Das Schutzschild 12 ist hier so ausgebildet, dass es das Mantelrohr 2' vollständig umgibt, wobei zwischen dem Schutzschild 12 und dem Mantelrohr 2' zudem eine Isolationsschicht 13 aus einem z. B. keramischen, glas- oder quarzhaltigem Material vorgesehen ist, so dass der Schutzschild 12 mitsamt Isolationsschicht 13 zudem eine Isolierung der Abgasverrohrung ausbildet. Mit einem derartigen Aufbau wird zuverlässig vermieden, dass Steinschlag 11 durch die Durchgangsöffnungen 6 hindurchtritt und zu einer Beschädigung der Metallfolie 5 führen kann.

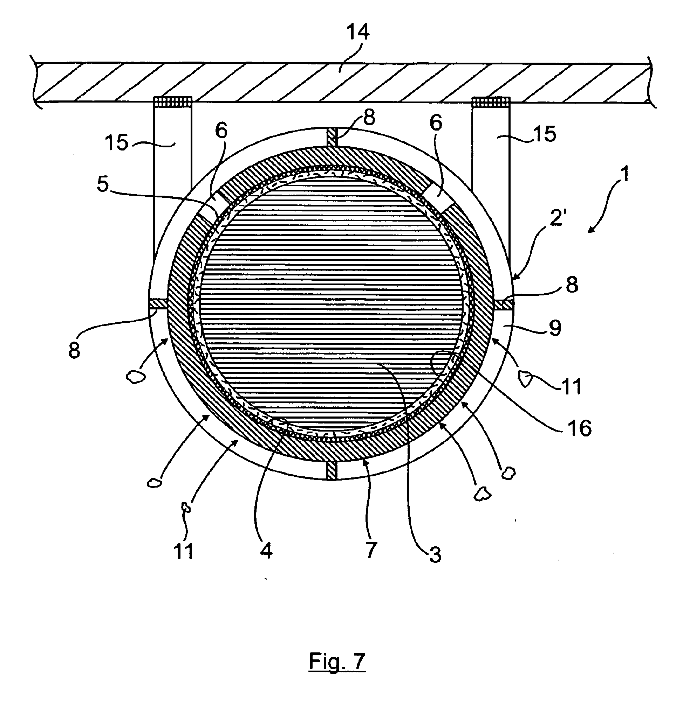

Für den Fall, dass kein derartiges Schutzschild angebracht werden kann, kann gemäß einer in der Fig. 7 dargestellten alternativen Ausgestaltung vorgesehen sein, die Durchgangsöffnungen 6 lediglich chassisseitig auf der einem Fahrzeugunterbau 14 zugewandten Seite des Mantelrohres 2' auszubilden. In der Fig. 7 ist hier zudem lediglich beispielhaft die Halterung des Katalysators 1 am Fahrzeugunterbau 14 über Halter 15 angedeutet.

Die in Verbindung mit den vorstehenden Beispielen Beschriebenen Versteifungselemente, nämlich die Längsrippen 8, 8' und die Umfangsrippen 9 können in Abweichung zu diesen Beispielen selbstverständlich entfallen, wenn eine entsprechende Versteifungsmaßnahme, aufgrund gegebener Stabilität der Anordnung, insbesondere des Mantelrohres, nicht erforderlich ist.

## Patentansprüche

1. Abgasnachbehandlungselement zur Entfernung von Schadstoffen und/oder Partikeln aus dem Abgas einer Brennkraftmaschine, mit einem Trägerkörper oder Substrat, das in einem Mantelrohr, insbesondere formschlüssig oder über Löt- oder Schweißverbindungen, aufgenommen ist, wobei das Mantelrohr wenigstens eine wandseitige Durchgangsöffnung aufweist, **dadurch gekennzeichnet, dass** in Rohrlängsrichtung (x) des Mantelrohres (2, 2') gesehen eine Vielzahl voneinander beabstandeter Durchgangsöffnungen (6) vorgesehen sind und die Durchgangsöffnungen (6) mittels wenigstens eines gegenüber einem nicht ausgesparten Durchgangsöffnungsbereich eine geringere thermische Masse aufweisenden Abdeckelementes (5) abgedeckt und/oder verschlossen sind.

2. Abgasnachbehandlungselement nach Anspruch 1, **dadurch gekennzeichnet, dass** die wenigstens eine Durchgangsöffnung (6) mittels wenigstens einer zwischen dem Substrat (3) und der Rohrinnenwand (4) angeordneten Zwischenschicht als Abdeckelement abgedeckt ist.

3. Abgasnachbehandlungselement nach Anspruch 2, **dadurch gekennzeichnet, dass** die Zwischenschicht (5) im Falle einer zur Fixierung und/oder Lagerung des Substrats (3) im Mantelrohr (2, 2') wenigstens in Teilbereichen vorgesehenen Fixierschicht, insbesondere einer Lager- und/oder Quellmatte (16), zwischen der Fixierschicht und der Rohrinnenwand (4) und/oder zwischen der Fixierschicht und dem Substrat (3) angeordnet ist.

4. Abgasnachbehandlungselement nach einem der Ansprüche 1 bis 3, **dadurch gekennzeichnet, dass** das Substrat (3) im Mantelrohr (2, 2') durch eine Formschluss- und/oder Kraftschluss- und/oder Stoffschlussverbindung fixiert ist.

5. Abgasnachbehandlungselement nach Anspruch 4, **dadurch gekennzeichnet, dass** die Formschlussverbindung durch eine, vorzugsweise als Nut- und Federverbindung ausgebildete, Rastverbindung mit mantelrohrseitigen und substratseitigen Rast- und Rastgegenelementen ausgebildet ist.

6. Abgasnachbehandlungselement nach einem der Ansprüche 1 bis 5, **dadurch gekennzeichnet, dass** das Abdeckelement (5), insbesondere eine Zwischenschicht, gasundurchlässig ausgebildet ist.

7. Abgasnachbehandlungselement nach einem der Ansprüche 1 bis 6, **dadurch gekennzeichnet, dass** das Abdeckelement (5), insbesondere eine Zwischenschicht, einstückig und/oder materialeinheitlich ausgebildet ist.

8. Abgasnachbehandlungselement nach einem der Ansprüche 1 bis 7, **dadurch gekennzeichnet, dass** das Mantelrohr (2, 2') in Rohrlängs- und Rohrumfangsrichtung gesehen eine Mehrzahl von voneinander beabstandeten wandseitigen Durchgangsöffnungen (6) aufweist, wobei bevorzugt vorgesehen ist, dass die wandseitigen Durchgangsöffnungen (6) in Rohrlängs- und/oder Rohrumfangsrichtung gesehen einen jeweils gleichen Abstand voneinander aufweisen, und/oder dass sämtliche wandseitigen Durchgangsöffnungen (6) eine gleiche Form und Größe aufweisen.

9. Abgasnachbehandlungselement nach einem der Ansprüche 1 bis 8, **dadurch gekennzeichnet, dass** das Mantelrohr (2, 2') auf der dem Substrat (3) abgewandten Rohraußenwand (7) und/oder auf der dem Substrat (3) zugewandten Rohrinnenwand (4) wenigstens ein das Mantelrohr (2, 2') entlang einer vorgegebenen Mantelrohrlänge und/oder entlang eines vorgegebenen Mantelrohrumfangsbereiches versteifendes Versteifungselement (8, 8', 9) aufweist.

10. Abgasnachbehandlungselement nach Anspruch 9, **dadurch gekennzeichnet, dass** als Versteifungselement (8, 8', 9) eine Mehrzahl von stegartig von der Rohraußenwand (7) und/oder der Rohrinnenwand (4) abstehenden Versteifungsrippen vorgesehen ist.

11. Abgasnachbehandlungselement nach Anspruch 10, **dadurch gekennzeichnet, dass** sich wenigstens ein Teil der Versteifungsrippen als Längsrippen (8, 8') wenigstens abschnittsweise im Wesentlichen in Rohrlängsrichtung erstreckt und/oder als Umfangsrippen (9) wenigstens abschnittsweise im Wesentlichen in Rohrumfangsrichtung erstreckt.

12. Abgasnachbehandlungselement nach Anspruch 10 oder 11, **dadurch gekennzeichnet, dass** eine Mehrzahl von einander unter einem vorgegebenen Winkel schneidenden Versteifungsrippen (8, 8', 9) vorgesehen ist.

13. Abgasnachbehandlungselement nach Anspruch 12, **dadurch gekennzeichnet, dass** zwei Gruppen von innerhalb jeder Gruppe im Wesentlichen parallel zueinander verlaufenden, unterschiedlichen Versteifungsrippen (8, 8', 9) vorgesehen sind, wobei die Versteifungsrippen (8, 8', 9) der beiden Gruppen einander unter einem vorgegebenen Winkel kreuzen und schneiden und somit ein regelmäßiges Versteifungsmuster an der Rohraußenwand (7) und/oder Rohrinnenwand (4) ausbilden.

14. Abgasnachbehandlungselement nach Anspruch 13, **dadurch gekennzeichnet, dass** die Versteifungsrippen (8, 8', 9) ein regelmäßiges, wabenförmiges Kreuzmuster ausbilden, und dass in den Waben (10) die Durchgangsöffnungen (6) ausgebildet sind.

15. Abgasnachbehandlungselement nach einem der Ansprüche 9 bis 14, **dadurch gekennzeichnet, dass** das wenigstens eine Versteifungselement (8, 8', 9) einstückig und materialeinheitlich mit dem Mantelrohr (2, 2') ausgebildet und aus diesem durch Umformen herausgebildet ist, oder dass das wenigstens eine Versteifungselement (8, 8', 9) durch ein separates Bauteil gebildet und mit dem Mantelrohr (2, 2') stoff- und/oder form- und/oder kraftschlüssig verbunden ist.

16. Abgasnachbehandlungselement nach einem der Ansprüche 1 bis 15, **dadurch gekennzeichnet, dass** das Abgasnachbehandlungselement (1) in einem Schalldämpfergehäuse aufgenommen ist, wobei bevorzugt vorgesehen ist, dass das Abgasnachbehandlungselement (1) stromab der letzten Durchgangsöffnung gasdicht an das Schalldämpfergehäuse oder an einer Trennwand in dem Schalldämpfergehäuse fixiert ist, so dass sich innerhalb des Schalldämpfers eine Rohgasseite und eine Reingasseite ausbildet und die Durchgangsöffnungen auf der Rohgasseite liegen.

17. Abgasnachbehandlungselement nach einem der Ansprüche 1 bis 16, **dadurch gekennzeichnet, dass** das Mantelrohr (2, 2') wenigstens bereichsweise von einem Schutzschild (12) umgeben ist, das gegebenenfalls einen vorgegebenen Abstand von der Rohraußenwand (7) und/oder von dort angeordneten oder ausgebildeten Versteifungselementen (8, 8', 9) aufweist, wobei bevorzugt vorgesehen ist, dass zwischen der Rohraußenwand (7) und dem Schutzschild (12) eine Isolationsschicht (13), vorzugsweise aus einem keramischen und/oder quarzhaltigen und/oder glashaltigen Material angeordnet ist.

18. Abgasnachbehandlungselement nach einem der Ansprüche 1 bis 17, **dadurch gekennzeichnet, dass** die wenigstens eine Durchgangsöffnung (6) im montierten Zustand des Abgasnachbehandlungselementes (1) auf einer der Straße abgewandten und dem Fahrzeugunterbau (14) zugewandten Seite der Rohraußenwand (7) angeordnet ist.

19. Abgasnachbehandlungselement nach einem der Ansprüche 1 bis 18, **dadurch gekennzeichnet, dass** das Substrat (3) herausnehmbar und austauschbar im Mantelrohr (2, 2') und/oder in einem Schalldämpfer und/oder im Abgastrakt gehaltert und aufgenommen ist.

## Claims

1. An exhaust aftertreatment element for the removal of pollutants and/or particles from the exhaust of an internal combustion engine, with a carrier or substrate which is held in a casing tube, in particular in positive manner or via soldered or welded joins, the casing tube having at least one wall-side passage opening, **characterised in that**, viewed in the longitudinal direction (x) of the casing tube (2, 2'), a plurality of spaced-apart passage openings (6) are provided, and the passage openings (6) are covered and/or closed by means of at least one covering element (5) having a lesser thermal mass than a non-cutout passage-opening region.

2. An exhaust aftertreatment element according to Claim 1, **characterised in that** the at least one passage opening (6) is covered by means of at least one intermediate layer arranged between the substrate (3) and the inner tube wall (4) as covering element.

3. An exhaust aftertreatment element according to Claim 2, **characterised in that** the intermediate layer (5) in the case of a fixing layer provided at least in partial regions for fixing and/or bearing of the substrate (3) in the casing tube (2, 2'), in particular a bearing and/or expansion mat (16), is arranged between the fixing layer and the inner tube wall (4) and/or between the fixing layer and the substrate (3).

4. An exhaust aftertreatment element according to one of Claims 1 to 3, **characterised in that** the substrate (3) is fixed in the casing tube (2, 2') by a positive lock and/or non-positive lock and/or material lock connection.

5. An exhaust aftertreatment element according to Claim 4, **characterised in that** the positive lock connection is formed by a latch connection, preferably in the form of a tongue and groove connection, with latch elements and mating latch elements on the casing tube side and on the substrate side.

6. An exhaust aftertreatment element according to one of Claims 1 to 5, **characterised in that** the covering element (5), in particular an intermediate layer, is formed to be impermeable to gas.

7. An exhaust aftertreatment element according to one of Claims 1 to 6, **characterised in that** the covering element (5), in particular an intermediate layer, is formed in one piece and/or of uniform material.

8. An exhaust aftertreatment element according to one of Claims 1 to 7, **characterised in that** the casing tube (2, 2'), viewed in the longitudinal and peripheral direction of the tube, has a plurality of wall-side passage openings (6) spaced apart from each other, with provision preferably being made for the wall-side passage openings (6), viewed in the longitudinal and/or peripheral direction of the tube, to be at equal distances from each other in each case, and/or for all the wall-side passage openings (6) to have the same form and size.

9. An exhaust aftertreatment element according to one of Claims 1 to 8, **characterised in that** the casing tube (2, 2') on the outer tube wall (7) remote from the substrate (3) and/or on the inner tube wall (4) facing the substrate (3) has at least one reinforcing element (8, 8', 9) which reinforces the casing tube (2, 2') along a pre-set casing tube length and/or along a pre-set casing tube peripheral region.

10. An exhaust aftertreatment element according to Claim 9, **characterised in that** a plurality of reinforcing ribs which project in the manner of webs from the outer tube wall (7) and/or the inner tube wall (4) are provided as reinforcing elements (8, 8', 9).

11. An exhaust aftertreatment element according to Claim 10, **characterised in that** at least some of the reinforcing ribs extend as longitudinal ribs (8, 8') at least in sections substantially in the longitudinal direction of the tube and/or as peripheral ribs (9) at least in sections substantially in the peripheral direction of the tube.

12. An exhaust aftertreatment element according to Claim 10 or 11, **characterised in that** a plurality of reinforcing ribs (8, 8', 9) which intersect each other at a predetermined angle is provided.

13. An exhaust aftertreatment element according to Claim 12, **characterised in that** two groups of different reinforcing ribs (8, 8', 9) which extend substantially parallel to each other within each group are provided, the reinforcing ribs (8, 8', 9) of the two groups crossing and intersecting each other at a predetermined angle and thus forming a regular reinforcement pattern on the outer tube wall (7) and/or inner tube wall (4).

14. An exhaust aftertreatment element according to Claim 13, **characterised in that** the reinforcing ribs (8, 8', 9) form a regular, honeycomb-shaped cross pattern, and **in that** the passage openings (6) are formed in the honeycombs (10).

15. An exhaust aftertreatment element according to one of Claims 9 to 14, **characterised in that** the at least one reinforcing element (8, 8', 9) is formed in one piece and of uniform material with the casing tube (2, 2'), and is formed out of the latter by shaping, or **in that** the at least one reinforcing element (8, 8', 9) is formed by a separate component and is connected to the casing tube (2, 2') by a material connection and/or in positive and/or in non-positive manner.

16. An exhaust aftertreatment element according to one of Claims 1 to 15, **characterised in that** the exhaust aftertreatment element (1) is held in a silencer housing, with provision preferably being made for the exhaust aftertreatment element (1) to be fixed in gas-tight manner to the silencer housing or to a partition in the silencer housing downstream from the last passage opening, so that an untreated-gas side and a clean-gas side form within the silencer and the passage openings are located on the untreated-gas side.

17. An exhaust aftertreatment element according to one of Claims 1 to 16, **characterised in that** the casing tube (2, 2') is surrounded at least in regions by a protective shield (12) which is optionally at a predetermined distance from the outer tube wall (7) and/or from the reinforcing elements (8, 8', 9) arranged or formed there, with provision preferably being made for an insulating layer (13), preferably made from a ceramic and/or quartz-containing and/or glass-containing material, to be arranged between the outer tube wall (7) and the protective shield (12).

18. An exhaust aftertreatment element according to one of Claims 1 to 17, **characterised in that** the at least one passage opening (6) in the mounted state of the exhaust aftertreatment element (1) is arranged on a side of the outer tube wall (7) which is remote from the road and faces the vehicle chassis (14).

19. An exhaust aftertreatment element according to one of Claims 1 to 18, **characterised in that** the substrate (3) is held and received in removable and exchangeable manner in the casing tube (2, 2') and/or in a silencer and/or in the exhaust system.

## Revendications

1. Elément de post-traitement des gaz d'échappement pour éliminer les substances nocives et/ou les particules des gaz d'échappement d'un moteur thermique comportant un support ou substrat dans le tube-enveloppe, notamment par une liaison par la forme et/ou une liaison par brasure ou soudure,
l'enveloppe du tube ayant au moins un orifice traversant la paroi, élément **caractérisé en ce que**
dans sa direction longitudinale (x) le tube-enveloppe (2, 2'), a un grand nombre d'orifices de passage (6) écartés les uns des autres et les orifices de passage (6) sont couverts et/ou fermés par au moins un élément de couverture (5) ayant une masse thermique plus faible que la zone de passage non traversée.

2. Elément de post-traitement des gaz d'échappement selon la revendication 1,
**caractérisé par**
au moins un orifice de passage (6) couvert par au moins une cloison intermédiaire entre le substrat (3) et la paroi intérieure du tube (4), cette cloison intermédiaire étant en forme d'élément de recouvrement.

3. Elément de post-traitement des gaz d'échappement selon la revendication 2,
**caractérisé en ce que**
dans le cas d'une couche de fixation dans au moins des zones partielles, notamment un tapis de stockage et/ou de gonflement (16), pour fixer et/ou pour stocker du substrat (3) dans le tube-enveloppe (2, 2'), la couche intermédiaire (5) est prévue entre la couche de fixation et la paroi intérieure (4) du tube et/ou entre la couche de fixation et le substrat (3).

4. Elément de post-traitement des gaz d'échappement selon l'une des revendications 1 à 3,
**caractérisé en ce que**
le substrat (3) est fixé dans le tube-enveloppe (2, 2') par une liaison par la forme et/ou par la force et/ou par la matière.

5. Elément de post-traitement des gaz d'échappement selon la revendication 4,
**caractérisé en ce que**
la liaison par la forme est constituée par une liaison à rainure, de préférence à rainure et languette, avec des éléments d'enclipage et des éléments d'enclipage complémentaires, autoporteurs, reliés à la liaison par rainure et languette, à la liaison par enclipage aux éléments côté enveloppe et côté substrat pour les éléments au repos.

6. Elément de post-traitement des gaz d'échappement selon l'une des revendications 1 à 5,
**caractérisé en ce que**
l'élément de recouvrement (5) est réalisé notamment sous la forme d'une couche intermédiaire, imperméable aux gaz.

7. Elément de post-traitement des gaz d'échappement selon l'une des revendications 1 à 6,
**caractérisé en ce que**
l'élément de recouvrement (5) est réalisé notamment par une couche intermédiaire en une seule pièce et/ou dans la même matière.

8. Elément de post-traitement des gaz d'échappement selon l'une des revendications 1 à 7,
**caractérisé en ce que**
le tube-enveloppe (2, 2') vu dans sa direction longitudinale et dans la direction périphérique du tube, comporte un ensemble d'orifices traversants (6) côté paroi, écartés les uns des autres, et de préférence les orifices traversants côté paroi (6), vus sur toute la longueur du tube et/ou la direction périphérique du tube, sont respectivement séparés de la même distance entre eux et/ou tous les orifices traversants (6), côté paroi, ont la même forme et la même dimension.

9. Elément de post-traitement des gaz d'échappement selon l'une des revendications 1 à 8,
**caractérisé en ce que**
sur la paroi extérieure (7) du tube, à l'opposé du substrat (3) et/ou sur la paroi intérieure du tube (4) tournée vers le substrat (3), le tube-enveloppe (2, 2') comporte au moins un élément de rigidification (8, 8', 9) renforçant le tube-enveloppe (2, 2') suivant une longueur de tube-enveloppe prédéfinie et/ou le long d'une plage périphérique de tube-enveloppe, prédéfinie.

10. Elément de post-traitement des gaz d'échappement selon la revendication 9,
**caractérisé en ce que**
l'élément de rigidification (8, 8', 9) comporte un ensemble de nervures de renforcement, en saillie de la paroi extérieure (7) du tube et/ou de la paroi intérieure (4) du tube.

11. Elément de post-traitement des gaz d'échappement selon la revendication 10,
**caractérisé en ce qu'**
au moins une partie des nervures de renforcement sont des nervures longitudinales (8, 8') qui s'étendent au moins par segments, pratiquement dans la direction longitudinale du tube et/ou comme nervures périphériques (9) qui s'étendent au moins par segments pratiquement dans la direction périphérique du tube.

12. Elément de post-traitement des gaz d'échappement selon la revendication 10 ou 11,
**caractérisé par**
un ensemble de nervures de rigidification (8, 8', 9) se coupant suivant un angle prédéfini.

13. Elément de post-traitement des gaz d'échappement selon la revendication 12,
**caractérisé par**
deux groupes de nervures de rigidification (8, 8', 9), différentes, essentiellement parallèles dans chaque groupe,
- les nervures de rigidification (8, 8', 9) des deux groupes, se croisant et se coupant suivant un angle donné, et au moins un motif de rigidification régulier est réalisé sur la paroi extérieure (7) du tube et/ou sa paroi intérieure (4).

14. Elément de post-traitement des gaz d'échappement selon la revendication 13,
**caractérisé en ce que**
les nervures de rigidification (8, 8', 9) forment un motif croisé régulier en nids d'abeilles, et
les alvéoles (10) sont réalisées par les orifices traversants (6).

15. Elément de post-traitement des gaz d'échappement selon l'une des revendications 9 à 14,
**caractérisé par**
au moins un élément de rigidification (8, 8', 9) réalisé en une seule pièce et de manière uniforme en matière, avec le tube-enveloppe (2, 2'), et réalisé dans celui-ci par transformation ou au moins un élément de rigidification (8, 8', 9) est formé par un composant distinct et est relié au tube-enveloppe (2, 2') par une liaison par la matière et/ou par la forme et/ou par une liaison par la force.

16. Elément de post-traitement des gaz d'échappement selon l'une des revendications 1 à 15,
**caractérisé en ce que**
l'élément de post-traitement des gaz d'échappement (1) est logé dans un boîtier d'isolation phonique,
et de préférence l'élément de post-traitement des gaz d'échappement (1) est fixé en aval du dernier orifice traversant, de manière étanche au boitier d'isolation phonique ou à une cloison dans le boîtier d'isolation phonique pour former dans l'amortisseur phonique, un côté de gaz brut et un côté de gaz nettoyé et les orifices de passage sont du côté du gaz brut.

17. Elément de post-traitement des gaz d'échappement selon l'une des revendications 1 à 16,
**caractérisé en ce que**
le tube-enveloppe (2, 2') est entouré au moins par endroits par un panneau protecteur (12) qui a le cas échéant une distance prédéfinie entre la paroi extérieure tubulaire (7) et/ou les éléments de rigidification (8, 8', 9) réalisés ou prévus à cet effet,
et de préférence, entre la paroi extérieure du tube (7) et le panneau protecteur (12), il y a une couche d'isolation (13), de préférence en une matière céramique et/ou contenant du quartz et/ou contenant du métal.

18. Elément de post-traitement des gaz d'échappement selon l'une des revendications 1 à 17,
**caractérisé en ce qu'**
à l'état installé de l'élément de post-traitement des gaz d'échappement (1), au moins un orifice traversant (6) est sur le côté de la paroi extérieure brute (7) non tournée vers la chaussée et tournée vers le côté correspondant à l'infrastructure (14).

19. Elément de post-traitement des gaz d'échappement selon l'une des revendications 1 à 18,
**caractérisé en ce que**
le substrat (3) est extractible et peut être remplacé dans le tube-enveloppe (2, 2') et/ou dans un amortisseur de bruit et/ou en fonction du conduit des gaz d'échappement.
